# DEMANDE DE BREVET EUROPEEN

(11) **EP 3 661 200 A1**
(43) Date de publication de la demande: **03.06.2020**
(21) Numéro de dépôt: 20153376.7
(22) Date de dépôt: 18.10.2011
(51) Int. Cl.: H04N 19/105, H04N 19/109, H04N 19/176, H04N 19/179, H04N 19/46, H04N 19/51, H04N 19/61

(54) **CODAGE ET DÉCODAGE VIDÉO À PARTIR D'UN ÉPITOME**

(30) Priorité: 25.10.2010 FR 1058748
(62) Demande divisionnaire de: 11787716.7
(71) Demandeur: ORANGE, 75015 Paris (FR)
(72) Inventeur: AMONOU, Isabelle, 92326 CHATILLON (FR)
(74) Mandataire: Vidon Brevets & Stratégie

(57) **Abrégé**

L'invention concerne un procédé de codage d'une séquence d'images.

Selon l'invention, un tel procédé met en œuvre les étapes suivantes, pour au moins une image courante de la séquence :
- construire un épitomé représentatif de l'image courante, à partir de ladite séquence, l'image courante et les images de ladite séquence appartenant à un même plan ;
- générer un signal comprenant ledit épitomé construit,
- générer des informations associées audit épitomé construit, lesdites informations étant ajoutées dans ledit signal généré ou dans un autre signal.

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage vidéo mis en œuvre dans les codeurs vidéo actuels (MPEG, H.264, etc et leurs amendements) ou à venir (ITU-T/ISO HEVC, en anglais « High-Efficiency Video Coding » pour codage vidéo à haute efficacité), et au décodage correspondant.

### 2. Art antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, la technique H.264 met en œuvre une prédiction de pixels d'une image courante par rapport à d'autres pixels appartenant à la même image (prédiction intra) ou à une image précédente ou suivante (prédiction inter).

Plus précisément, selon cette technique H.264, des images I sont codées par prédiction spatiale (prédiction intra), et des images P et B sont codées par prédiction temporelle par rapport à d'autres images I, P ou B (prédiction inter), codées/décodées à l'aide d'une compensation en mouvement par exemple.

Pour ce faire, les images sont découpées en macroblocs, qui sont ensuite subdivisés en blocs, constitués de pixels. Chaque bloc ou macrobloc est codé par prédiction intra ou inter images.

Classiquement, le codage d'un bloc courant est réalisé à l'aide d'une prédiction du bloc courant, dit bloc prédit, et d'un résidu de prédiction, correspondant à une différence entre le bloc courant et le bloc prédit. Ce résidu de prédiction, encore appelé bloc résiduel, est transmis au décodeur, qui reconstruit le bloc courant en ajoutant ce bloc résiduel à la prédiction.

La prédiction du bloc courant est établie à l'aide d'informations déjà reconstruites (blocs précédents déjà codés/décodés dans l'image courante, images préalablement codées dans le cadre d'un codage vidéo, etc). Le bloc résiduel obtenu est alors transformé, par exemple en utilisant une transformée de type DCT (transformée en cosinus discrète). Les coefficients du bloc résiduel transformé sont alors quantifiés, puis codés par un codage entropique.

Le décodage est fait image par image, et pour chaque image, bloc par bloc ou macrobloc par macrobloc. Pour chaque (macro)bloc, les éléments correspondants du flux sont lus. La quantification inverse et la transformation inverse des coefficients du(des) bloc(s) résiduel(s) associé(s) au (macro)bloc sont effectuées. Puis, la prédiction du (macro)bloc est calculée et le (macro)bloc est reconstruit en ajoutant la prédiction au(x) bloc(s) résiduel(s) décodé(s).

Selon cette technique de compression, on transmet donc des blocs résiduels transformés, quantifiés, et codés, au décodeur, pour lui permettre de reconstruire la ou les image(s) d'origine. Classiquement, afin de disposer au codeur et au décodeur des mêmes informations de prédiction, le codeur inclut le décodeur dans sa boucle de codage.

Afin d'améliorer encore la compression des images ou séquences d'images, Q. Wang, R. Hu et Z. Wang ont proposé une nouvelle technique de prédiction intra dans le document « Improving Intra Coding in H.264\AVC by Image Epitome, Advances in Multimedia Information Processing », basée sur l'utilisation d'épitomés (en anglais « epitome » ou « jigsaw »).

Un épitomé est une version condensée, généralement miniature, d'une image, contenant les composantes principales de textures et de contour de cette image. La taille de l'épitomé est généralement réduite par rapport à celle de l'image d'origine, mais l'épitomé contient toujours les éléments constitutifs les plus pertinents pour la reconstruction de l'image. Comme décrit dans le document précité, l'épitomé peut être construit en utilisant une technique de type maximum de vraisemblance a posteriori (en anglais MLE, pour « Maximum Likelihood Estimation »), associée à un algorithme de type espérance/maximisation (en anglais EM, pour « Expectation/Maximization »). Une fois que l'épitomé a été construit pour l'image, il peut être utilisé pour reconstruire (synthétiser) certaines parties de l'image.

Les épitomés ont d'abord été utilisés pour l'analyse et la synthèse d'images et de vidéos. Pour ces applications, la synthèse dite « inverse » permet de générer un échantillon de texture (correspondant à l'épitomé) qui représente au mieux une texture plus large. Lors de la synthèse dite « directe », il est alors possible de re-synthétiser une texture de taille arbitraire à partir de cet échantillon. Par exemple, il est possible de re-synthétiser la façade d'un immeuble à partir d'un échantillon de texture correspondant à un étage de l'immeuble, ou à une fenêtre et ses contours de l'immeuble.

Dans le document précité, Q. Wang et al. ont proposé d'intégrer une telle méthode de synthèse inverse au sein d'un codeur H.264. La technique de prédiction intra selon ce document est basée sur la construction d'un épitomé au codeur. La prédiction du bloc en cours de codage est alors générée à partir de l'épitomé, par une technique dite de « Template Matching » exploitant la recherche d'un motif similaire dans l'épitomé à partir des observations connues dans un voisinage de la zone à reconstruire. En d'autres termes, le bloc de l'épitomé qui possède le voisinage le plus proche de celui du bloc en cours de codage est utilisé pour cette prédiction. Cet épitomé est ensuite transmis au décodeur, et utilisé pour remplacer la prédiction DC du codeur H.264.

On utilise de cette façon une information globale sur l'image à coder pour la prédiction intra (l'épitomé étant construit à partir de l'image entière), et non uniquement le voisinage causal du bloc en cours de codage. De plus, l'utilisation d'un épitomé pour la prédiction intra permet d'améliorer la compression des données transmises, puisque l'épitomé est une version condensée de l'image. Par ailleurs, la prédiction intra mise en oeuvre à partir d'un épitomé ne présuppose pas un alignement des blocs de l'image.

Toutefois, bien que cette technique de prédiction offre de bonnes performances en termes de compression, elle n'est pas adaptée au codage de tout type d'images ou séquences d'images.

### 3. Exposé de l'invention

L'invention propose un nouveau procédé de codage d'une séquence d'images.

Selon l'invention, un tel procédé met en œuvre les étapes suivantes, pour au moins une image courante de la séquence :
- construire un épitomé représentatif de l'image courante, à partir de ladite séquence, l'image courante et les images de ladite séquence appartenant à un même plan ;
- générer un signal comprenant ledit épitomé construit,
- générer des informations associées audit épitomé construit, lesdites informations étant ajoutées dans ledit signal généré ou dans un autre signal.

Ainsi, l'invention propose une nouvelle technique de codage d'images, basée sur la génération et l'utilisation au codeur (et au décodeur destiné à décoder la séquence d'images) d'un épitomé, ou image condensée, spécifique.

Un tel épitomé est construit à partir de plusieurs images de la séquence, et est donc représentatif d'une partie de la séquence.

L'épitomé ainsi construit n'est pas nécessairement transmis au décodeur, et peut être reconstruit par le décodeur. On améliore de cette façon la compacité des données transmises. Ainsi, l'invention permet de réduire le débit nécessaire au codage d'une séquence d'images, sans en affecter la qualité.

Selon une variante, ledit épitomé construit est codé, ledit signal généré comprenant ledit épitomé construit, codé.

En variante, ledit signal généré est transmis à un décodeur d'images. Ainsi, l'épitomé est transmis au décodeur, qui peut l'utiliser comme image de référence. Cette variante permet également d'améliorer la compacité des données transmises, puisque l'épitomé est une version condensée d'au moins deux images selon l'invention.

En particulier, l'image courante et l'ensemble d'images utilisé pour construire l'épitomé appartiennent à une même sous-séquence de la séquence.

Une telle sous-séquence appartient au groupe comprenant :
- un même plan d'images;
- un GOP (en anglais « Group Of Pictures » pour groupe d'images), comprenant par exemple des images de type P et B localisées entre deux images de type I selon l'ordre de codage de la séquence, tel que défini selon les normes H263, MPEG2, etc.

L'ensemble d'images utilisé pour construire l'épitomé peut également être une liste d'images de référence de l'image courante, définie par exemple selon les normes MPEG4, H.264, etc.

Par exemple, on utilise pour construire l'épitomé une sous-séquence d'images correspondant à une même scène (ou « shot ») de la séquence d'images que l'image courante. De cette façon, les différentes images de la sous-séquence présentent des caractéristiques communes, ce qui simplifie la construction de l'épitomé et permet de diminuer sa taille.

Selon une autre caractéristique de l'invention, l'étape de construction tient également compte du voisinage causal de l'image courante. L'épitomé ainsi construit représente au mieux l'image courante.

Selon un aspect particulier de l'invention, pour le codage d'au moins une image suivant l'image courante selon un ordre de codage de la séquence, le procédé de codage comprend une étape de mise à jour d'un ensemble d'images de la séquence ayant été utilisées pour construire l'épitomé, , et de mise à jour de l'épitomé à partir de l'ensemble mis à jour.

De cette façon, il n'est pas nécessaire de construire un nouvel épitomé pour chaque nouvelle image, ce qui permet de diminuer la quantité d'opérations à effectuer. De plus, l'épitomé ainsi mis à jour reste particulièrement bien représentatif de la sous-séquence d'images.

Par exemple, il est possible de mettre à jour l'épitomé en tenant compte d'une « image de différence » entre l'image courante et une image suivant cette image courante, dite image suivante.

Selon cet aspect de l'invention, le procédé de codage comprend une étape de transmission d'un épitomé complémentaire à au moins un décodeur destiné à décoder la séquence d'images, obtenu par comparaison de l'épitomé associé à l'image courante et de l'épitomé mis à jour associé à une image suivante.

On diminue de cette façon la quantité d'informations à transmettre au décodeur. En effet, il est possible selon cet aspect de ne transmettre que les différences entre l'épitomé associé à l'image courante et l'épitomé mis à jour, au lieu de transmettre l'épitomé mis à jour.

Selon une caractéristique particulière de l'invention, l'épitomé présente une taille identique à celle de l'image courante.

Dans cette façon, il n'est pas nécessaire de re-dimensionner les vecteurs de mouvement utilisés pour la prédiction inter-images.

De plus, il est ainsi possible d'utiliser pour la prédiction un épitomé de meilleure qualité, qui peut être plus volumineux dans la mesure où il n'est pas nécessairement transmis au décodeur. En effet, la taille de l'épitomé pouvant être choisie, il est possible de réaliser un compromis entre la qualité de la reconstruction et la compacité : plus l'épitomé est grand et plus la qualité de codage sera élevée.

Dans un autre mode de réalisation, l'invention concerne un dispositif de codage d'une séquence d'images comprenant les moyens suivants, activés pour au moins une image courante de la séquence :
- des moyens de construction d'un épitomé représentatif de ladite image courante, à partir de ladite séquence, l'image courante et les images de ladite séquence appartenant à un même plan ;
- des moyens de génération d'un signal comprenant ledit épitomé construit,
des moyens de génération d'informations associées audit épitomé construit, lesdites informations étant ajoutées dans ledit signal généré ou dans un autre signal Un tel codeur est notamment adapté à mettre en œuvre le procédé de codage décrit précédemment. Il s'agit par exemple d'un codeur vidéo de type H.264. Ce dispositif de codage pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.
L'invention concerne également un signal représentatif d'une séquence d'images codée selon le procédé de codage décrit ci-dessus et comprenant ledit épitomé construit ou bien construit et codé.

Ce signal pourra bien sûr comporter les différentes caractéristiques relatives au procédé de codage selon l'invention.

Selon un mode particulier de réalisation de l'invention, le signal comprend en outre des informations associées audit épitomé construit.

L'invention concerne également un support d'enregistrement portant un signal tel que décrit précédemment.

Un autre aspect de l'invention concerne un procédé de décodage d'un signal représentatif d'une séquence d'images mettant en œuvre les étapes suivantes, pour au moins une image courante à reconstruire de ladite séquence :
- lire dans ledit signal des données représentatives d'un épitomé représentatif de l'image courante,
- lire dans ledit signal ou dans un autre signal des informations associées audit épitomé,
- construire ledit épitomé, à partir des données et des informations lues et à partir de ladite séquence, l'image courante et les images de ladite séquence appartenant à un même plan.

L'invention permet ainsi de retrouver l'épitomé spécifique au niveau du décodeur. Un tel procédé de décodage est notamment adapté à décoder une séquence d'images codée selon le procédé de codage décrit ci-dessus. Les caractéristiques et avantages de ce procédé de décodage sont donc les mêmes que ceux du procédé de codage, et ne sont pas détaillés plus amplement.

En particulier, selon un premier mode de réalisation, l'épitomé est construit à partir des données et des informations lues dans le signal et à partir de ladite séquence, l'image courante et les images de ladite séquence appartenant à un même plan. En d'autres termes, l'épitomé n'est pas transmis dans le signal, ce qui permet d'améliorer la qualité des données (qui peuvent être prédites à partir d'un épitomé plus volumineux), et la compacité des données transmises.

Selon un deuxième mode de réalisation, les données lues sont représentatives d'un épitomé codé et ledit épitomé est décodé et construit. Selon ce deuxième mode de réalisation, l'épitomé est construit au codage et transmis dans le signal.
Selon un mode particulier de réalisation de l'invention, l'étape de construction tient également compte du voisinage causal de ladite image courante.
Selon un autre mode particulier de réalisation de l'invention, le procédé de décodage comprend en outre pour le décodage d'au moins une image suivant ladite image à reconstruire selon un ordre de décodage de ladite séquence, une étape de mise à jour d'un ensemble d'images de ladite séquence ayant été utilisées pour construire l'épitomé et de mise à jour dudit épitomé à partir dudit ensemble mis à jour.
En variante, ladite étape de mise à jour met à jour ledit épitomé à partir d'un épitomé complémentaire compris dans ledit signal ou dans un autre signal, ledit épitomé complémentaire étant obtenu par comparaison dudit épitomé et dudit épitomé mis à jour.

Dans un autre mode de réalisation, l'invention concerne un dispositif de décodage d'un signal représentatif d'une séquence d'images, comprenant les moyens suivants, activés pour au moins une image à reconstruire :
- des moyens de lecture pour :
   - lire dans ledit signal des données représentatives d'un épitomé représentatif de l'image courante,
   - lire dans ledit signal ou dans un autre signal des informations associées audit épitomé,
- des moyens de construction dudit épitomé, à partir des données et des informations lues et à partir de ladite séquence, l'image courante et les images de ladite séquence appartenant à un même plan.

Un tel décodeur est notamment adapté à mettre en œuvre le procédé de décodage décrit précédemment. Il s'agit par exemple d'un décodeur vidéo de type H.264.

Ce dispositif de décodage pourra bien sûr comporter les différentes caractéristiques relatives au procédé de décodage selon l'invention.

L'invention concerne encore un programme d'ordinateur comportant des instructions pour la mise en œuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur. L'invention concerne également un support d'enregistrement lisible par ordinateur comportant un programme d'ordinateur mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1 et 2 présentent les principales étapes mises en œuvre respectivement au codage et au décodage selon l'invention ;
- la figure 3 illustre un exemple de réalisation d'un codeur selon la figure 1 ;
- les figures 4, 5A et 5B présentent des exemples de construction d'un épitomé ;
- les figures 6 et 7 présentent la structure simplifiée d'un codeur et d'un décodeur selon un mode de réalisation particulier de l'invention.

### 5. Description d'un mode de réalisation de l'invention

### 5.1 Principe général

Le principe général de l'invention repose sur l'utilisation d'un épitomé spécifique pour la prédiction d'au moins une image inter d'une séquence d'images. Plus précisément, un tel épitomé est construit à partir de plusieurs images de la séquence, et est donc représentatif d'une partie de la séquence. L'invention permet ainsi de coder plus efficacement l'image inter.

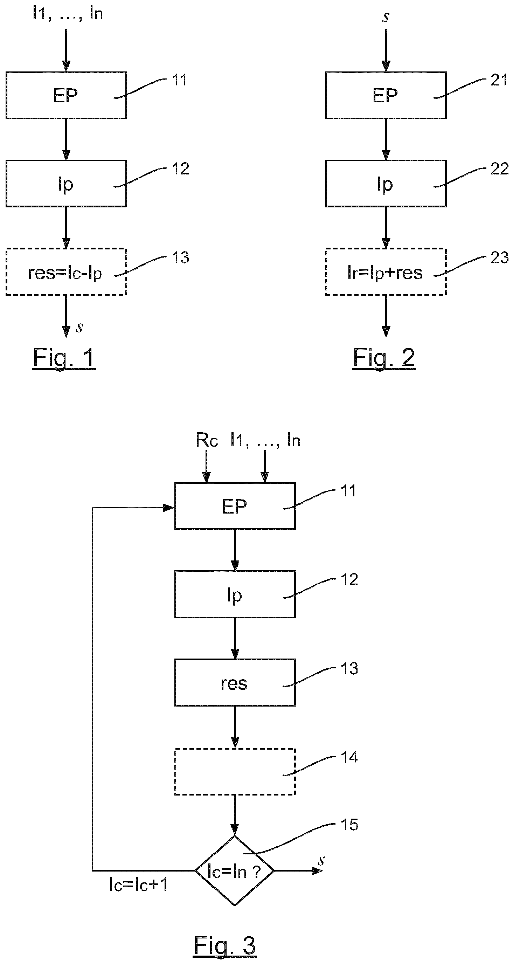

La figure 1 illustre les principales étapes mises en œuvre par un codeur selon l'invention.

Un tel codeur reçoit en entrée une séquence d'images I1 à In. Il construit (11) alors, pour au moins une image courante Ic de la séquence, un épitomé EP représentatif de l'image courante, à partir d'un ensemble d'au moins deux images de la séquence. On considère que l'image courante et l'ensemble d'images utilisé pour construire l'épitomé EP appartiennent à une même sous-séquence de la séquence, comprenant par exemple des images appartenant à un même plan (en anglais « shot ») ou un même GOP, ou une liste d'images de référence de l'image courante. L'épitomé EP est construit de manière à représenter au mieux cette sous-séquence d'images.

Au cours d'une étape suivante, le codeur met en œuvre une prédiction 12 de type inter-images de l'image courante, à partir de l'épitomé EP. Une telle prédiction met par exemple en œuvre une compensation en mouvement ou une technique de type « Template Matching » appliquée à l'épitomé, et délivre une image prédite Ip.

Il est ensuite possible de coder, au cours d'une étape de codage 13, le résidu de prédiction obtenu par comparaison entre l'image courante Ic et l'image prédite Ip.

La figure 2 illustre les principales étapes mises en œuvre par un décodeur selon l'invention.

Un tel décodeur reçoit en entrée un signal représentatif d'une séquence d'images.

Il met en œuvre une étape d'obtention 21, pour au moins une image à reconstruire Ir, d'un épitomé EP représentatif de l'image à reconstruire, et éventuellement d'un résidu de prédiction associé à l'image à reconstruire.

Au cours d'une étape suivante, le décodeur met en œuvre une prédiction 22 de type inter-images de l'image à reconstruire, à partir de l'épitomé EP.

Il est alors possible de reconstruire l'image Ir, au cours d'une étape de décodage 23, en ajoutant le résidu de prédiction à l'image obtenue à l'issue de l'étape de prédiction 22.

Selon un premier mode de réalisation, l'épitomé utilisé pour le codage de l'image courante Ic n'est pas transmis au décodeur. L'étape d'obtention 21 met alors en œuvre une étape de construction de l'épitomé à partir d'au moins deux images de la séquence, similaire à celle mise en œ uvre par le codeur.

Selon un deuxième mode de réalisation, l'épitomé utilisé pour le codage de l'image courante Ic est transmis au décodeur. L'étape d'obtention 21 met alors en œuvre une étape de lecture de l'épitomé dans le signal.

### 5.2 Exemple de réalisation

On décrit ci-après, en relation avec les figures 3 à 5B, un exemple particulier de réalisation de l'invention, dans le contexte d'un codeur selon la norme H.264.

### 5.2.1 Côté codeur

On considère un codeur vidéo recevant en entrée une séquence d'images I1 à In, ainsi qu'un niveau de résolution cible, défini en fonction de la taille de l'épitomé. En effet, on rappelle qu'il est possible de réaliser un compromis entre la qualité de la reconstruction et la compacité en fonction de la taille de l'épitomé : plus l'épitomé est grand et plus la qualité de codage sera élevée. On note que la taille de l'épitomé correspond au maximum à la somme des tailles des images de l'ensemble servant à la génération de l'épitomé. Un bon compromis est de choisir comme taille cible de l'épitomé la taille d'une image de cet ensemble. Si, par exemple, on utilise une liste de référence comprenant huit images pour générer l'épitomé, on obtient dans ce cas un épitomé de qualité correcte tout en gagnant un facteur de compaction de huit.

### A) Construction de l'épitomé

Lors de l'étape de construction 11, le codeur construit, pour au moins une image courante Ic de la séquence, un épitomé EP représentatif de l'image courante, à partir d'un ensemble d'au moins deux images de la séquence.

L'ensemble d'images de la séquence traitées conjointement pour construire l'épitomé peut être choisi préalablement à l'étape de construction 11. Il s'agit par exemple d'images appartenant à un même plan que l'image courante.

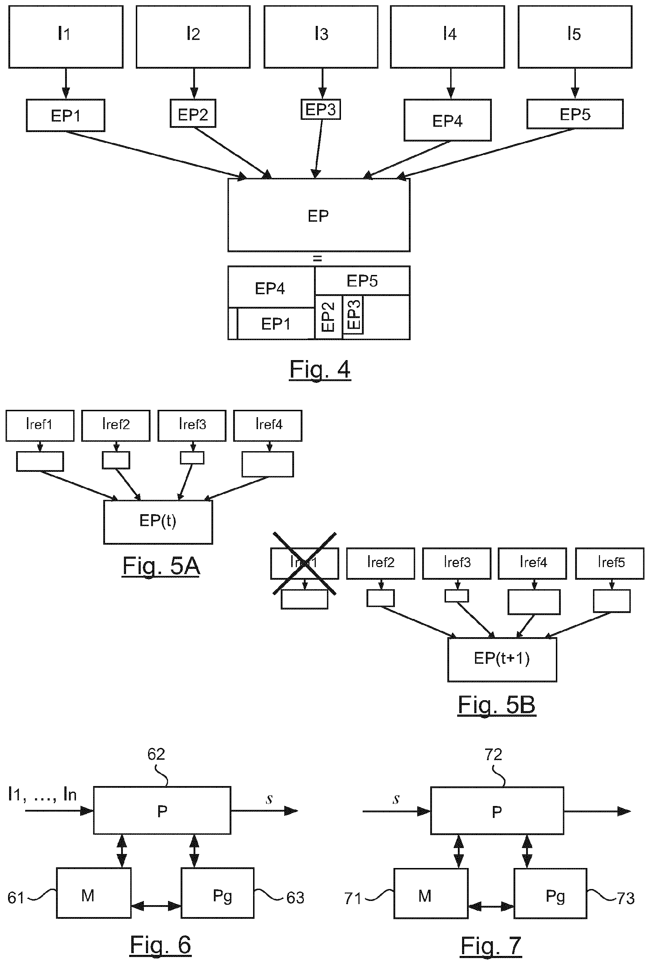

On considère par exemple une sous-séquence comprenant les images I1 à I5 et l'image courante Ic. L'épitomé utilisé pour prédire l'image courante Ic est construit à partir des images I1 à I5. Pour ce faire, comme illustré en figure 4, on détermine des épitomés associés à chacune des images I1 à I5, notés respectivement EP1 à EP5, en utilisant une technique classique de construction des épitomés, comme la technique de type maximum de vraisemblance a posteriori telle que présentée par Q. Wang et al. dans le document « Improving Intra Coding in H.264\AVC by Image Epitome, Advances in Multimedia Information Processing »*.* On « concatène » ensuite ces différents épitomés EP1 à EP5, pour construire l'épitomé « global» EP utilisé pour prédire l'image courante Ic. Une telle technique de « concaténation » d'épitomés est notamment présentée dans le document *« Factoring repeated content within and among images »,* de H. Wang, Y. Wexler, E. Ofek, et H. Hoppe, et propose d'emboîter les épitomés EP1 à EP5 de façon à obtenir un épitomé global EP le plus compact possible. Selon cette technique, les éléments (ensembles de pixels, blocs) communs aux différents épitomés EP1 à EP5 ne sont pris qu'une fois dans l'épitomé global EP. Ainsi, l'épitomé global EP présente une taille au maximum égale à la somme des tailles des épitomés EP1 à EP5.

Selon une variante, le codeur construit l'épitomé en utilisant un ensemble dynamique, c'est-à-dire une liste d'images dans laquelle on ajoute et/ou on retire des images en fonction du contexte et/ou de l'avancement du codage dans la séquence. L'épitomé est donc calculé progressivement pour chaque nouvelle image à coder appartenant à un même plan, un même GOP, etc.

Par exemple, comme illustré en figures 5A et 5B, le codeur construit l'épitomé en utilisant une liste d'images de référence de l'image courante Ic en cours de codage, telle que définie dans la norme H.264.

A titre d'exemple, comme illustré en figure 5A, quatre images Iref1 à Iref4 se trouvent dans la liste d'images de référence de l'image courante Ic. Ces quatre images sont alors utilisées pour générer l'épitomé EP à l'instant t, en utilisant par exemple la technique de concaténation proposée par H. Wang et al.

A l'instant t+1, comme illustré en figure 5B, pour le codage d'une image de la sous-séquence suivant l'image courante Ic selon l'ordre de codage, la première image Iref de la liste d'images de référence est retirée et une nouvelle image Iref5 est ajoutée dans la liste d'images de référence. L'épitomé EP est alors mis à jour à partir de la liste d'images de référence mise à jour. Il est ainsi possible selon cette variante de raffiner l'épitomé « global » pour chaque nouvelle image à coder appartenant à un même plan, un même GOP, etc. Ainsi, l'épitomé EP à l'instant t+1 est généré à partir des quatre images Iref2 à Iref5, correspondant aux trois anciennes images Iref2 à Iref4 utilisés pour générer l'épitomé à l'instant t et à la nouvelle image Iref5. L'épitomé calculé sur la base de la nouvelle image de référence Iref5, noté épitomé complémentaire, pourra être transmis à l'instant t+1 au décodeur, en lieu et place de l'épitomé global EP(t+1).

Bien entendu, d'autres techniques de construction de l'épitomé EP à partir de plusieurs images sont également envisageables.

En particulier, l'étape de construction 11 peut également tenir compte du voisinage causal de l'image courante, en plus des images existantes de la sous-séquence, pour construire l'épitomé EP.

A l'issue de cette étape de construction 11, on obtient donc un épitomé EP « global » ou un épitomé complémentaire EPc associé à l'image courante Ic.

### B) Prédiction inter à partir de l'épitomé

On détermine alors une prédiction de type inter-image de l'image courante, notée Ip, au cours de l'étape 12, à partir de l'épitomé EP.

Une telle prédiction met par exemple en œuvre une compensation en mouvement à partir de l'épitomé. En d'autres termes, on considère que l'épitomé EP ainsi construit est une image de référence, et on prédit l'image courante Ic à partir de vecteurs de mouvement pointant de l'image courante vers l'épitomé EP (compensation en arrière) ou de l'épitomé vers l'image courante (compensation en mouvement en avant).

En variante, une telle prédiction met en œuvre une technique de type « Template Matching » appliquée à l'épitomé. Dans ce cas, le voisinage (« template » ou « modèle » cible) d'un bloc de l'image courante est sélectionné. En général, il s'agit de pixels formant un L (« L-Shape ») au-dessus et à gauche de ce bloc (bloc cible). Ce voisinage est comparé à des formes équivalentes (« templates » ou « modèles » sources) dans l'épitomé. Si un modèle source est proche du modèle cible (selon un critère de distance), le bloc correspondant du modèle source est utilisé comme prédiction du bloc cible.

### C) Codage et transmission de l'image

Il est ensuite possible de coder, au cours d'une étape de codage 13, le résidu de prédiction obtenu par comparaison entre l'image courante Ic et l'image prédite Ip.

### D) Codage et transmission de l'épitomé

L'étape de codage et transmission de l'épitomé 14 est facultative.

En effet, selon un premier mode de réalisation, l'épitomé EP utilisé pour le codage de l'image courante Ic n'est pas transmis au décodeur. Cet épitomé est en revanche regénéré au décodeur, sur la base des images existantes de la séquence et éventuellement du voisinage causal de l'image courante.

Selon un deuxième mode de réalisation, l'épitomé EP, ou un épitomé complémentaire EPc, utilisé pour le codage de l'image courante Ic est transmis au décodeur. Dans ce cas, il n'est plus nécessaire d'adjoindre à l'image en cours de codage le numéro de la ou des images qui servent classiquement de référence pour sa prédiction (en anglais « reference frame number »).

### E) Fin de l'algorithme de codage

Si l'image courante est la dernière image de la séquence d'images (test 15, Ic = In ?), on arrête l'algorithme de codage.

Sinon, on passe à l'image suivant l'image courante dans la séquence selon l'ordre de codage (Ic+1), et on retourne à l'étape de construction 11 de l'épitomé pour cette nouvelle image.

On note que l'étape de prédiction 12 pourrait mettre en œuvre un autre mode de codage, pour au moins une image de la séquence. En effet, on choisit pour la prédiction le mode de codage qui offre un meilleur compromis débit/distorsion, parmi l'ensemble des modes de codage existant et le mode de codage basé sur l'utilisation d'un épitomé selon l'invention.

En particulier, l'étape de prédiction 12 peut mettre en œuvre un autre mode de codage pour au moins un bloc d'une image de la séquence si la prédiction est mise en œuvre bloc par bloc.

Ainsi, en variante, l'étape de prédiction 12 peut être précédée par un test permettant de déterminer si le mode de reconstruction par vecteur de mouvement à partir de l'épitomé (noté M_EPIT) est le meilleur pour chaque bloc à coder. Si tel n'est pas le cas, l'étape de prédiction 12 peut mettre en œuvre une autre technique de prédiction.

### 5.2.2 Signal représentatif de la séquence d'images

Le signal généré par le codeur peut porter différentes informations, selon que l'épitomé ou un épitomé complémentaire est transmis ou non au décodeur, pour au moins une image de la séquence.

Ainsi, par exemple, un tel signal comprend au moins un indicateur permettant de signaler qu'un épitomé est utilisé pour prédire une ou plusieurs images de la séquence, qu'un épitomé ou plusieurs épitomés sont transmis dans le signal, qu'un épitomé complémentaire ou plusieurs épitomés complémentaires sont transmis dans le signal, etc.

On note que les épitomés ou épitomés complémentaires, qui sont des données de type image, peuvent être codés dans le signal comme des images de la séquence.

### 5.2.3 Côté décodeur

Les principales étapes mises en œuvre au décodeur ont d'ores et déjà été décrites en relation avec la figure 2.

Plus précisément, le décodeur met en œuvre une étape d'obtention 21, pour au moins une image à reconstruire Ir, d'un épitomé EP représentatif de l'image à reconstruire.

Selon un premier mode de réalisation, l'épitomé utilisé pour le codage de l'image courante Ic n'est pas transmis au décodeur. Par exemple, le décodeur lit dans le signal représentatif de la séquence d'image au moins un indicateur signalant qu'un épitomé a été utilisé pour prédire l'image à reconstruire, et que cet épitomé n'est pas transmis dans le signal.

Le décodeur met alors en œuvre une étape de construction de l'épitomé EP à partir d'au moins deux images de la séquence, similaire à celle mise en œuvre par le codeur précédemment décrite.

Comme pour le codeur, l'épitomé peut être construit en utilisant un ensemble dynamique, c'est-à-dire une liste d'images dans laquelle on ajoute et/ou on retire des images en fonction du contexte et/ou de l'avancement du décodage dans la séquence. L'épitomé est donc calculé progressivement pour chaque nouvelle image à reconstruire appartenant à une même plan, un même GOP, etc.

Par exemple, le décodeur construit l'épitomé en utilisant une liste d'images de référence de l'image en cours de décodage, telle que définie dans la norme H.264.

Selon un deuxième mode de réalisation, l'épitomé utilisé pour le codage de l'image courante Ic est transmis au décodeur. Par exemple, le décodeur lit dans le signal représentatif de la séquence d'image au moins un indicateur signalant qu'un épitomé a été utilisé pour prédire l'image à reconstruire, et que cet épitomé, ou un épitomé complémentaire, est transmis dans le signal.

Le décodeur met alors en œuvre une étape de lecture de l'épitomé EP ou d'un épitomé complémentaire dans le signal.

Plus précisément, on considère que pour la première image à reconstruire d'une sous-séquence, on reçoit l'épitomé EP. Ensuite, pour au moins une image à reconstruire suivant la première image à reconstruire dans la sous-séquence selon l'ordre de décodage, on reçoit un épitomé complémentaire, permettant de mettre à jour l'épitomé EP.

Une fois l'épitomé obtenu, le décodeur met en œuvre une prédiction de l'image à reconstruire. Si l'image à reconstruire ou au moins un bloc de l'image à reconstruire ont été prédit au codage à partir de l'épitomé (mode M_EPIT), l'étape de prédiction 22 met en œuvre une prédiction de type inter-images à partir de l'épitomé, similaire à celle mise en œuvre par le codeur précédemment décrite.

Ainsi une telle prédiction met par exemple en œuvre une compensation en mouvement ou une technique de « Template Matching » à partir de l'épitomé.

Le décodeur utilise donc l'épitomé comme source de prédiction alternative pour l'estimation de mouvement.

### 5.3 Structure du codeur et du décodeur

On présente finalement, en relation avec les figures 6 et 7, la structure simplifiée d'un codeur et d'un décodeur mettant respectivement en œuvre une technique de codage et une technique de décodage selon l'un des modes de réalisation décrits ci-dessus.

Par exemple, le codeur comprend une mémoire 61 comprenant une mémoire tampon M, une unité de traitement 62, équipée par exemple d'un processeur P, et pilotée par un programme d'ordinateur Pg 63, mettant en œuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une séquence d'images à coder. Le processeur de l'unité de traitement 62 met en œuvre les étapes du procédé de codage décrit précédemment, selon les instructions du programme d'ordinateur 63, pour coder au moins une image courante de la séquence. Pour cela, le codeur comprend, outre la mémoire 61, des moyens de construction d'un épitomé représentatif de l'image courante, à partir d'un ensemble d'au moins deux images de la séquence et des moyens de prédiction inter-images de l'image courante à partir de l'épitomé. Ces moyens sont pilotés par le processeur de l'unité de traitement 62.

Le décodeur comprend quant à lui une mémoire 71 comprenant une mémoire tampon M, une unité de traitement 72, équipée par exemple d'un processeur P, et pilotée par un programme d'ordinateur Pg 73, mettant en œuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal représentatif de la séquence d'images. Le processeur de l'unité de traitement 72 met en œuvre les étapes du procédé de décodage décrit précédemment, selon les instructions du programme d'ordinateur 73, pour décoder et reconstruire au moins une image de la séquence. Pour cela, le décodeur comprend, outre la mémoire 71 des moyens d'obtention d'un épitomé représentatif de l'image à reconstruire, et des moyens de prédiction inter-images de l'image à reconstruire à partir de l'épitomé. Ces moyens sont pilotés par le processeur de l'unité de traitement 72.

## Revendications

1. Procédé de codage d'une séquence d'images, mettant en œuvre les étapes suivantes, pour au moins une image courante de ladite séquence :
- construire un épitomé représentatif de l'image courante, à partir de ladite séquence, l'image courante et les images de ladite séquence appartenant à un même plan ;
- générer un signal comprenant ledit épitomé construit,
- générer des informations associées audit épitomé construit, lesdites informations étant ajoutées dans ledit signal généré ou dans un autre signal.

2. Procédé de codage selon la revendication 1, **caractérisé en ce que** ledit épitomé construit est codé, ledit signal généré comprenant ledit épitomé construit, codé.

3. Procédé de codage selon la revendication 1 ou la revendication 2, **caractérisé en ce que** ledit signal généré est transmis à un décodeur d'images.

4. Procédé de codage selon la revendication 1, **caractérisé en ce que** ladite étape de construction tient également compte du voisinage causal de ladite image courante.

5. Procédé de codage selon la revendication 1, comprenant en outre, pour le codage d'au moins une image suivant ladite image courante selon un ordre de codage de ladite séquence, une étape de mise à jour d'un ensemble d'images de ladite séquence ayant été utilisées pour construire l'épitomé et de mise à jour dudit épitomé à partir dudit ensemble mis à jour.

6. Procédé de codage selon la revendication 5, **caractérisé en ce qu'**il comprend une étape de transmission d'un épitomé complémentaire à au moins un décodeur destiné à décoder ladite séquence d'images, ledit épitomé complémentaire étant obtenu par comparaison dudit épitomé et dudit épitomé mis à jour.

7. Dispositif de codage d'une séquence d'images, comprenant les moyens suivants, activés pour au moins une image courante de ladite séquence :
- des moyens de construction d'un épitomé représentatif de ladite image courante, à partir de ladite séquence, l'image courante et les images de ladite séquence appartenant à un même plan ;
- des moyens de génération d'un signal comprenant ledit épitomé construit,
- des moyens de génération d'informations associées audit épitomé construit, lesdites informations étant ajoutées dans ledit signal généré ou dans un autre signal.

8. Signal représentatif d'une séquence d'images codée selon le procédé de codage selon l'une quelconque des revendications 1 à 6, **caractérisé en ce que** ledit signal comprend ledit épitomé construit ou bien construit et codé.

9. Signal selon la revendication 8, **caractérisé en ce qu'**il comprend en outre des informations associées audit épitomé construit.

10. Procédé de décodage d'un signal représentatif d'une séquence d'images, mettant en œuvre les étapes suivantes, pour au moins une image courante à reconstruire de ladite séquence :
- lire dans ledit signal des données représentatives d'un épitomé représentatif de l'image courante,
- lire dans ledit signal ou dans un autre signal des informations associées audit épitomé,
- construire ledit épitomé, à partir des données et des informations lues et à partir de ladite séquence, l'image courante et les images de ladite séquence appartenant à un même plan.

11. Procédé de décodage selon la revendication 10, **caractérisé en ce que** les données lues sont représentatives d'un épitomé codé et **en ce que** ledit épitomé est décodé et construit.

12. Procédé de décodage selon la revendication 10, **caractérisé en ce que** ladite étape de construction tient également compte du voisinage causal de ladite image courante.

13. Procédé de décodage selon la revendication 10, comprenant en outre pour le décodage d'au moins une image suivant ladite image à reconstruire selon un ordre de décodage de ladite séquence, une étape de mise à jour d'un ensemble d'images de ladite séquence ayant été utilisées pour construire l'épitomé et de mise à jour dudit épitomé à partir dudit ensemble mis à jour.

14. Procédé de décodage selon la revendication 13, **caractérisé en ce que** ladite étape de mise à jour met à jour ledit épitomé à partir d'un épitomé complémentaire compris dans ledit signal ou dans un autre signal, ledit épitomé complémentaire étant obtenu par comparaison dudit épitomé et dudit épitomé mis à jour.

15. Dispositif de décodage d'un signal représentatif d'une séquence d'images, comprenant les moyens suivants, activés pour au moins une image courante à reconstruire de ladite séquence :
- des moyens de lecture pour :
- lire dans ledit signal des données représentatives d'un épitomé représentatif de l'image courante,
- lire dans ledit signal ou dans un autre signal des informations associées audit épitomé,
- des moyens de construction dudit épitomé, à partir des données et des informations lues et à partir de ladite séquence, l'image courante et les images de ladite séquence appartenant à un même plan.

16. Programme d'ordinateur comportant des instructions pour la mise en œuvre d'un procédé de codage d'une séquence d'images selon l'une quelconque des revendications 1 à 6 ou d'un procédé de décodage d'un signal représentatif d'une séquence d'images selon l'une quelconque des revendications 10 à 14, lorsque ce programme est exécuté par un processeur.

17. Support d'enregistrement lisible par ordinateur comportant un programme d'ordinateur selon la revendication 16.

18. Support d'enregistrement portant un signal selon la revendication 8 ou 9.
